# EUROPÄISCHE PATENTSCHRIFT

(11) **EP 2 597 317 B1**
(45) Veröffentlichungstag und Bekanntmachung des Hinweises auf die Patenterteilung: **15.01.2014**
(21) Anmeldenummer: 11190096.5
(22) Anmeldetag: 22.11.2011
(51) Int. Cl.: F15B 1/02, G05D 16/10

(54) **Motorpumpenaggregat für eine Werkzeugmaschine**
motor pump unit for a machine tool
groupe moteur-pompe pour une machine-outil

(43) Veröffentlichungstag der Anmeldung: 29.05.2013
(73) Patentinhaber: HAWE Hydraulik SE, 81673 München (DE)
(72) Erfinder: Neumair, Georg, 85402 Thalhausen (DE)
(74) Vertreter: Grünecker, Kinkeldey, Stockmair & Schwanhäusser

(56) Entgegenhaltungen:
- CN-U- 201 963 625
- DE-A1-102008 019 743
- DE-U1- 29 710 129
- DE-U1- 29 808 294

## Beschreibung

Die Erfindung betrifft eine Werkzeugmaschine gemäß Oberbegriff des Patentanspruchs 1 sowie ein Motorpumpenaggregat gemäß Oberbegriff des Patentanspruchs 1.

Werkzeugmaschinen mit wenigstens einem Motorpumpenaggregat zur hydraulischen Versorgung der Betätigung der Funktionskomponenten sind bekannt. An sich sind für das Motorpumpenaggregat konträre Anforderungen gegeben, wenn dem Hochdruck-Abschnitt ein Druckspeicher zugeordnet ist, weil das Druckminderventil des Motorpumpenaggregats das hohe Druckniveau im Hochdruck-Abschnitt und den Druckspeicher vom niedrigen Druckniveau im Niederdruck-Abschnitt separieren muss, aus welchem die Funktionskomponenten versorgt werden. Durch ein üblicherweise als Druckminderventil verwendetes 2-Wege-Druckminderventil können nämlich unvermeidliche Drucksteigerungen im Niederdruck-Abschnitt nicht über das Druckminderventil zum Rücklauf abgebaut werden, z.B. ohne die Druckspeicher-Arbeitsfunktion zu beeinträchtigen. Ein 2-Wege-Druckminderventil stellt stromab einen bestimmten geminderten Druck unabhängig von Druckvariation stromauf ein. Eine Temperaturerhöhung beispielsweise im Bereich des Niederdruck-Abschnittes von 1°C hebt das Druckniveau bereits um ca. 10 bar. Ein eine Funktionskomponente blockierendes Hindernis in der Werkzeugmaschine kann ebenfalls eine Drucksteigerung hervorrufen, die im Niederdruck-Abschnitt z.B. die Höhe des Druckniveaus im Hochdruck-Abschnitt erreicht oder übersteigt. Solche Drucksteigerungen können die Systemsicherheit nachhaltig gefährden. Da in bekannten Werkzeugmaschinen die Ventile zumindest zum überwiegenden Teil Schieberventile sind, die selbst in der Absperrstellung Leckage zulassen, muss häufig aus dem Druckspeicher Druckmittel nachgefördert werden, obwohl die Ventile in Absperrstellung sind, woraus sich eine hohe Einschaltfrequenz und/oder lange Einschaltzyklen der Konstantpumpe ergeben, was die Energieeffizienz des Gesamtsystems verschlechtert. Es benötigt der Druckspeicher hierbei auch ein unerwünscht großes Ölaufnahmevolumen, so dass er unzweckmäßig groß baut und das Motorpumpenaggregat mit dem Druckspeicher unzweckmäßig viel Bauraum beansprucht, der in oder an Werkzeugmaschinen kostbar ist.

Aus DE 10 2008 019 743 A ist ein gattungsgemäßes Motorpumpenaggregat zur Versorgung von Funktionskomponenten in einem Spannsystem einer Werkzeugmaschine bekannt, das in der Ausführungsform in Fig. 8 das 3-Wege-Druckminderventil im Hochdruck-Abschnitt stromauf eines Wegeventils aufweist und Drucksteigerungen im Niederdruck-Abschnitt über eine Verbindung zur Rücklaufleitung abbaut. Der den Druck im Hochdruck-Abschnitt meldende Druckschalter ist im Hochdruck-Abschnitt stromauf eines Druckspeicher-Anschlusses angeschlossen. Die Pumpe ist über eine Umlaufschaltung zum Rücklauf permanent betrieben, um das geförderte Druckmittel dem Pumpenanschluss des Wegeventils zuzuführen. Der Druckspeicher ist getrennt von einem am Gehäuse des Motorpumpenaggregats montierten Ventilblock platziert.

Bei einer aus DE 297 10 129 U bekannten elektrohydraulischen Spannvorrichtung ist der Pumpe des Motorpumpenaggregats eine elektrische Umschaltvorrichtung mit einem Magnetventil mit nachgeordnetem Druckbegrenzer zugeordnet, um nach Laden des Druckspeichers die Pumpe auf drucklosem Umlauf zu schalten. Die permanent betriebene Pumpe erzeugt bei Ansprechen der Umlaufschaltung nach wie vor einen funktionsnotwendigen Vorsteuerdruck im System.

Aus CN 201963625 U ist ein durch einen Schwarz/Weiß- oder einem Proportionalmagneten betätigtes 3-Wege-Sitzventil bekannt, das zwischen zwei Schaltstellungen umschaltbar ist, und entweder einen Hochdruck-Abschnitt mit einem Niederdruckabschnitt verbindet und eine Verbindung zum Rücklauf blockiert, oder den Hochdruck-Abschnitt isoliert und den Niederdruck-Abschnitt mit dem Rücklauf verbindet.

Der Erfindung liegt die Aufgabe zugrunde, ein Motorpumpenaggregat anzugeben, mit dem trotz hoher Störungssicherheit für die Funktionskomponenten einer Werkzeugmaschine maximale Kompaktheit des Motorpumpenaggregats und eine verbesserte Energieeffizienz des Gesamtsystems möglich sind.

Die gestellte Aufgabe wird mit den Merkmalen des Patentanspruchs 1 gelöst.

Das 3-Wege-Druckminderventil in Sitzventilbauweise baut in der für den Druckspeicher und die Konstantpumpe leckagefreien Absperrstellung auftretende Drucksteigerungen im Niederdruck-Abschnitt zum Rücklauf ab und steigert so auf baulich einfache Weise die Störungssicherheit für die Funktionskomponenten der Werkzeugmaschine. Das 3-Wege-Druckminderventil stellt nämlich stromab einen bestimmten geminderten Druck unabhängig von Druckvariationen stromauf und stromab ein. Die Energieeffizienz des Systems ist verbessert, da der Druckspeicher in diesem statischen Zustand voll geladen bleibt und die Konstantpumpe nicht eingeschaltet zu werden braucht. Der Druckspeicher lässt sich mit großer Druckdifferenz zwischen der Abschalt-Obergrenze und der Einschalt-Untergrenze des Druckschalters aufladen, so dass er überraschend trotz minimalem Ölaufnahmevolumens im Betrieb der Werkzeugmaschine eine große Öl-Entnahmemenge bietet und primär alle Funktionskomponenten versorgen kann, wobei die Konstantpumpe nur zum Aufladen des Druckspeichers nur über eine zum Druckschalter gehörende Speicherladeschaltung im Abschaltbetrieb mit niedriger Einschaltfrequenz und/oder kurzen Einschaltzyklen zu laufen braucht. Diese Vorteile gehen einher mit dem nur kleinen ÖlAufnahmevolumen des Druckspeichers, d.h. einem Druckspeicher mit sehr kleinen Außenabmessungen, so dass insgesamt an der Werkzeugmaschine Bauraum gespart wird bzw. das Motorpumpenaggregat sehr kompakt ist, d.h., sogar mit dem am Motorpumpenaggregat installierten Druckspeicher kaum mehr Bauraum beansprucht als ein die Funktionskomponenten ohne Druckspeicher nur mit der Konstantpumpe versorgendes Motorpumpenaggregat. Die Ventile sind am Gehäuse des Motorpumpenaggregats außenseitig montiert. Der Druckspeicher ist kugelig mit einem Kugel-Außendurchmesser kleiner als die Außenabmessungen des Gehäuses und so am Gehäuse montiert, dass der Druckspeicher zumindest weitestgehend innerhalb des vom Gehäuse und den Ventilen beanspruchten Bauraums untergebracht ist. Das Motorpumpenaggregat beansprucht somit nur einen Bauraum wie ein Motorpumpenaggregat ohne Druckspeicher. Der Druckschalter ist stromab eines Anschlusses des Druckspeichers und stromauf des Eingangs des 3-Wege-Druckminderventils an den Hochdruck-Abschnitt angeschlossen, damit der Druckschalter tatsächlich stets den am Eingang des 3-Wege-Druckminderventils anstehenden Druck im Hochdruck-Abschnitt verfälschungsfrei abgreift und über die Speicher-Ladeschaltung die Konstantpumpe nicht ohne tatsächliche Notwendigkeit ein- und ausschaltet. Dabei sind der Druckschalter-Anschluss, der Druckspeicher-Anschluss im Hochdruck-Abschnitt, das 3-Wege-Druckminderventil und eine Leitung vom zweiten Auslass des 3-Wege-Druckminderventils zur Rücklaufleitung in einem am Gehäuse platzierten Ventilblockgehäuse zusammengefasst. Diese Anordnung sichert kurze Strömungswege mit geringen Drosselverlusten und verringert den nötigen Bauraum für diese Komponenten.

Um die Energieeffizienz des Systems in der Werkzeugmaschine noch weiter zu steigern, sind sämtliche Ventile in Sitzventil-Bauweise mit leckagefreien Absperrstellungen ausgebildet. Dadurch ist sichergestellt, dass sowohl im Hochdruck-Abschnitt als auch im Niederdruck-Abschnitt der Druckleitung in statischen Situationen des Systems die Druckniveaus über lange Zeit unverändert gehalten werden und das 3-Wege-Druckminderventil aus dem Druckspeicher dann kein Druckmittel nachzuspeisen braucht. Gegenüber beispielsweise in Japan üblichen Werkzeugmaschinen selbst mit großem Druckspeicher des Motorpumpenaggregats lässt sich so eine deutlich über 50 % liegende Einsparung an elektrischer Primärenergie erzielen.

Bei einer zweckmäßigen Ausführungsform liegt das Druckniveau im Niederdruck-Abschnitt bei etwa 100 bar und liegt das Druckniveau im Hochdruck-Abschnitt bei etwa 200 bar oder darüber, so dass die Abschalt-Ober- und Einschalt-Untergrenzen auf etwa 200 bar oder deutlich darüber und etwa 160 bar einstellbar sind, und das Ölaufnahmevolumen des Druckspeichers nur etwa 1,0 Liter zu betragen braucht. Aus der hohen Druckdifferenz bei der Speicherladung resultiert eine unerwartet große Entnahmemenge zur Versorgung der Funktionskomponenten im Betrieb der Werkzeugmaschine, ohne dass notwendigerweise die Konstantpumpe hierfür eingesetzt zu werden braucht.

In einem konkreten Fall kann der Kugel-Außendurchmesser des Druckspeichers nur etwa 150 mm betragen.

In einer konkreten Ausführungsform ist das Ventilblockgehäuse in etwa in der Höhenmitte des Gehäuses des Motorpumpenaggregats platziert, wird der Druckspeicher an der Oberseite des Gehäuses angebracht, und sind diese Komponenten über eine außerhalb des Gehäuses montierte Verrohrung verbunden. Dies trägt zu kompakten Abmessungen des Motorpumpenaggregats bei, weil auch die Verrohrung innerhalb des vom Gehäuse und den Ventilen des Motorpumpenaggregats beanspruchten Bauraums untergebracht werden kann.

In einer zweckmäßigen Ausführungsform ist der Druckspeicher mit einer Spannschelle, vorzugsweise mit einem Schnellverschluss, auf einem Gehäuse-Auflager des Motorpumpenaggregats fixiert. Dies bietet montagetechnische Vorteile.

Schließlich ist es bei einer Ausführungsform des Motorpumpenaggregats zweckmäßig, wenn das 3-Wege-Druckminderventil zwischen dem Eingang und dem ersten Ausgang einen Sitz und ein kugeliges oder kegeliges, gegen eine Feder in Schließrichtung zum Sitz vom Druckniveau im Hochdruck-Abschnitt und in Öffnungsrichtung vom Sitz weg vom Druckniveau im Niederdruck-Abschnitt beaufschlagtes Schließglied aufweist, das in Öffnungsrichtung aus der leckagefreien Absperrstellung am Sitz von einer Feder durch einen zum zweiten Ausgang durchgängigen, von einem vom Druckniveau im Niederdruck-Abschnitt beaufschlagten, gegenüber dem Rücklaufdruck druckausgeglichenen Kolben betätigbar ist, und wenn im Kolben zwischen den ersten und zweiten Ausgängen ein vom Schließglied baulich getrenntes Pilot-Sitzventil mit Stößelbetätigung untergebracht und auf einen im Bereich des zweiten Ausgangs stationär angeordneten Pilot-Sitzventil-Offnungsanschlag ausgerichtet ist. Das Pilot-Sitzventil wird nur zum Abbau von unvermeidbaren Drucksteigerungen im Niederdruck-Abschnitt in die Rücklaufleitung geöffnet, während das Schließglied seine leckagefreie Absperrstellung eingenommen und den Hochdruck-Abschnitt mit dem Druckspeicher vom Niederdruck-Abschnitt separiert hat. Dabei spricht das Pilot-Sitzventil automatisch öffnend auf solche Drucksteigerungen an, ohne Druckmittel aus dem Druckspeicher abzulassen oder den Druckschalter zum Ansprechen zu bringen.

Anhand der Zeichnungen werden Ausführungsformen des Erfindungsgegenstandes erläutert. Es zeigen:
- Fig. 1: ein Blockschaltbild einer nur symbolisch angedeuteten, mit einem Motorpumpen-aggregat und mehreren Ventilen für Funktionskomponenten ausgebildeten Werkzeugmaschine,
- Fig. 2: eine Seitenansicht des Motorpumpenaggregats, beispielsweise von Fig. 1,
- Fig. 3: eine Draufsicht des Motorpumpenaggregats von Fig. 2, und
- Fig. 4: einen Achsschnitt eines 3-Wege-Druckminderventils des Motorpumpenaggregats in leckagefreier Absperrstellung.

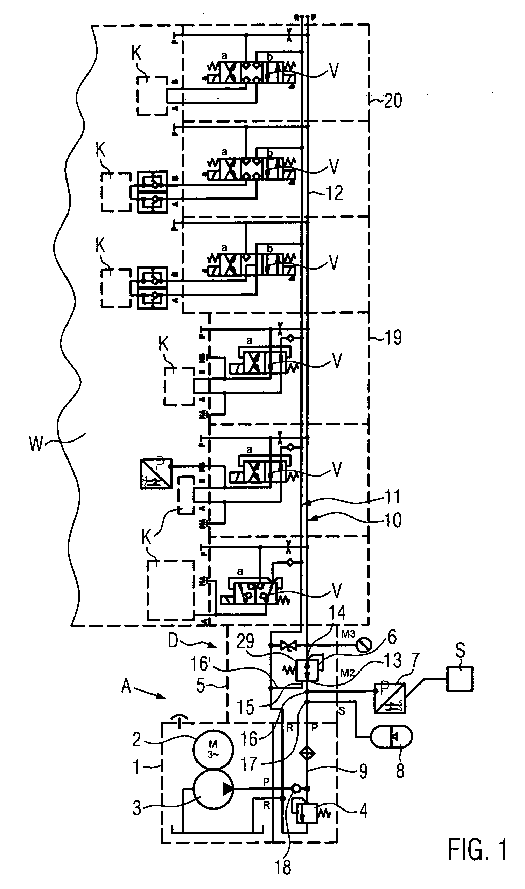

In Fig. 1 ist gestrichelt ein Teilbereich einer Werkzeugmaschine W angedeutet, in der mehrere hydraulisch betätigbare Funktionskomponenten K untergebracht sind, beispielsweise Spannsysteme für Werkzeuge, Werkstücke oder Verstellvorrichtungen von Maschinenelementen, die im Betrieb der Werkzeugmaschine zu versorgen sind. In, an oder bei der Werkzeugmaschine W ist zur hydraulischen Versorgung der Funktionskomponenten ein Motorpumpenaggregat A vorgesehen, das in einem gleichzeitig als Druckmittelreservoir und Rücklauf dienenden Gehäuse 1 einen Elektromotor 2 und eine Konstantpumpe 3 enthält. In das Gehäuse führt eine Rücklaufleitung 11. Aus dem Gehäuse 1 führt eine Druckleitung 10, die über ein in Rücklaufstromrichtung sperrendes Rückschlagventil 18 und ein Systemdruckbegrenzungsventil 4 zum Rücklauf (beispielsweise eingestellt auf 220 bar) angeschlossen ist. Zwischen den Funktionskomponenten K und der Druckleitung 10 sowie der Rücklaufleitung 11 sind Ventile V zum Steuern der Betätigung der Funktionskomponenten angeordnet, beispielsweise in Blöcken 19, 20, von denen die überwiegende Anzahl oder alle in Sitzventil-Bauweise ausgebildet sind, d.h., in ihren Absperrstellungen leckagefrei dicht sind.

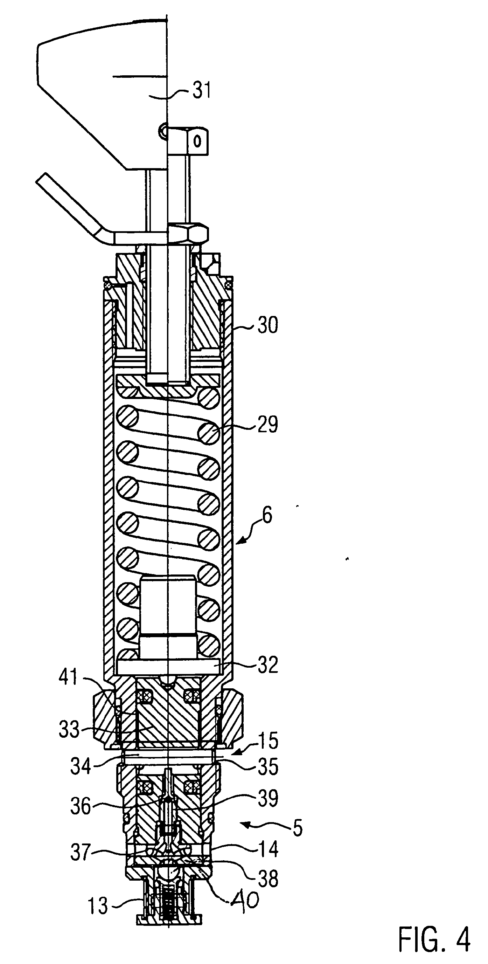

Ein Anfangsabschnitt der Druckleitung 10 ist als Hochdruck-Abschnitt 9 zwischen dem Motorpumpenaggregat A und einem Druckminderventil D vorgesehen, das als 3-Wege-Druckminderventil 6 ausgebildet ist. D.h., der Hochdruck-Abschnitt 9 ist an einen Eingang 13 des 3-Wege-Druckminderventils 6 angeschlossen, während der weitere Verlauf der Druckleitung 10 als Niederdruck-Abschnitt 12 an einen ersten Ausgang 14 des 3-Wege-Druckminderventils 6 angeschlossen ist und zu den Ventilen V führt. Das 3-Wege-Druckminderventil weist einen zweiten Ausgang 15 auf, der über eine Leitung 16' an die Rücklaufleitung 11 oder direkt das Gehäuse 1 angeschlossen ist. Das 3-Wege-Druckminderventil 6 arbeitet mit einer Feder 29 rein druckabhängig und ist in Sitzventil-Bauweise (Fig. 4) ausgebildet, d.h., es arbeitet mit einer leckagefreien Absperrstellung, in der der Hochdruck-Abschnitt 9 vom Niederdruck-Abschnitt 12 separiert ist.

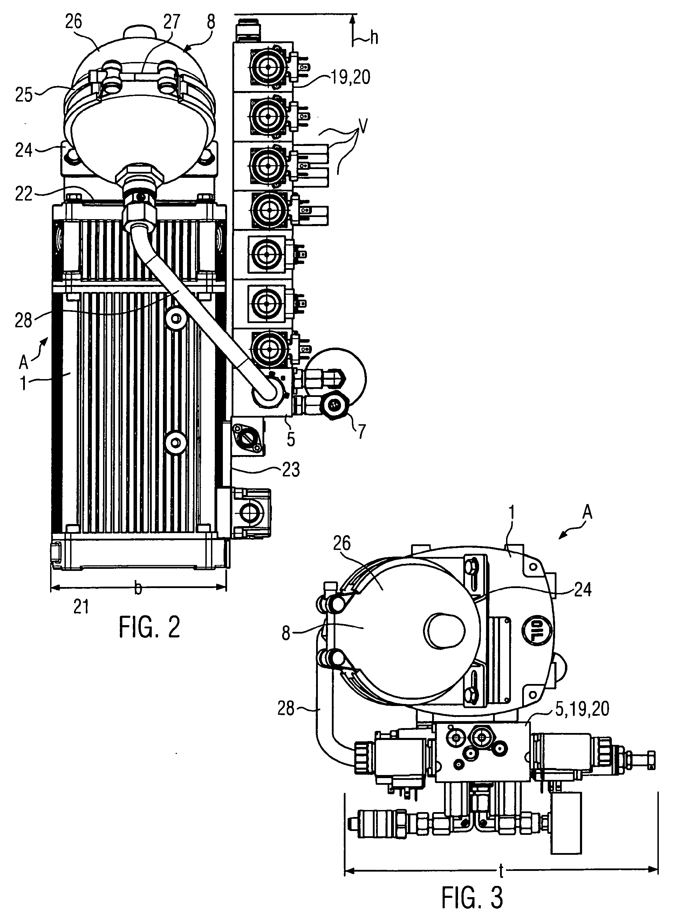

An den Hochdruck-Abschnitt 9 ist an einem Anschluss 16 ein Druckschalter 7 einer Speicherladeschaltung S stromab eines Anschlusses 17 eines Druckspeichers 8 angeschlossen. Der Druckspeicher 8 ist, zweckmäßig, am Motorpumpenaggregat A installiert (Fig. 2 und 3). Über die Speicherladeschaltung S wird beispielsweise der Elektromotor 2 bedarfsabhängig ein- und ausgeschaltet.

Das 3-Wege-Druckminderventil 6, die Anschlüsse 16, 17, die Feder 29 und die Leitung 16' zur Rücklaufleitung 11 sind zweckmäßig in einem Ventilblockgehäuse 5 kombiniert, das am Motorpumpenaggregat A bzw. dessen Gehäuse 1 montiert ist. An dieses Ventilblockgehäuse 5 sind z.B. die weiteren Ventilblöcke 19, 20 der Ventile V für die Funktionskomponenten K angebaut. Alternativ (nicht gezeigt) könnten die Ventilblöcke 19, 20 vom Motorpumpenaggregat A getrennt und mit dem Ventilblockgehäuse 5 über Verrohrungen oder Hochdruckschläuche verbunden sein.

Im Hochdruck-Abschnitt 9 herrscht beispielsweise ein Druckniveau von etwa 200 bar, gegebenenfalls bis etwa 220 bar. Im Niederdruck-Abschnitt 12 ist hingegen ein Druckniveau von nur etwa 100 bar durch die Einstellung oder Auslegung der Feder 29 des 3-Wege-Druckminderventils 6 vorgegeben. Der Druckschalter 7 kann auf eine Abschalt-Obergrenze von etwa 200 bar oder mehr und eine Einschalt-Untergrenze von etwa 160 bar oder zumindest dem 1,5-Fachen des Druckniveaus im Niederdruck-Abschnitt 12 eingestellt sein, so dass der Druckspeicher mit einer hohen Druckdifferenz und deutlich oberhalb des Druckniveaus im Niederdruck-Abschnitt 12 betreibbar ist.

Bei dem Druckspeicher 8 handelt es sich zweckmäßig um einen Druckspeicher mit Gasdruckvorspannung zumindest entsprechend dem Druckniveau im Niederdruck-Abschnitt 12, z.B. durch komprimierten Stickstoff an einer Seite einer flexiblen Membrane, die von der gegenüberliegenden Seite durch den hydraulischen Speicherladedruck verformbar ist, bis das im Wesentlichen gesamte Ölaufnahmevolumen des Druckspeichers 8 mit Hydrauliköl gefüllt ist und unter einem Druck von mindestens etwa 160 bar bis 200 bar oder mehr steht, so dass der Druckspeicher 8 primär ohne Assistenz der Konstantpumpe 3 die Funktionskomponenten K mit ausreichend großer Entnahmemenge zu versorgen vermag und die Konstantpumpe 3 nur mit geringer Einschaltfrequenz und/oder kurzen Einschaltzyklen betrieben werden braucht.

Die vorerwähnten Druckwerte sind nur Richtwerte und können über- oder unterschritten werden, je nach Auslegung und Typ der Werkzeugmaschine W und des Motorpumpenaggregats A.

Das beispielsweise bei, an oder in der Werkzeugmaschine W von Fig. 1 installierte Motorpumpenaggregat A geht im Detail aus den Fig. 2 und 3 hervor.

Das Gehäuse 1 ist beispielsweise annähernd quaderförmig und steht auf einer Basis 21. An einer Gehäuseseite 23 sind die Ventilblöcke 19, 20 mit den Ventilen V sowie das Ventilblockgehäuse 5 mit dem Druckschalter 7 angebaut, während der Druckspeicher 8 auf der Oberseite 22 des Gehäuses 1 in einem dort montierten Auflager 24, beispielsweise mit einer Spannschelle 25, fixiert ist, die einen Schnellverschluss 27 enthalten kann. Der Druckspeicher 8 hat in der gezeigten Ausführungsform beispielsweise ein kugelförmiges Gehäuse 26 mit einem Kugel-Außendurchmesser von etwa 150 mm (Ölaufnahmevolumen z.B. 1,0 Liter), und ist so am Motorpumpenaggregat A installiert, dass es zumindest im Wesentlichen innerhalb des durch das Gehäuse 1 und die Ventilblöcke 19, 20, 5 und deren periphere Ausstattungen beanspruchten Einbauraums mit den Abmessungen b, t und h untergebracht ist, so dass das Motorpumpenaggregat mit dem installierten Druckspeicher 8 nicht mehr Bauraum beansprucht als ein Motorpumpenaggregat ohne Druckspeicher. Das Ventilblockgehäuse 5 ist in etwa in der Höhenmitte unterhalb der Ventilblöcke 19, 20 montiert und mit dem Druckspeicher 8 über eine außen aufsteigend verlegte Verrohrung 28 verbunden. Das Motorpumpenaggregat A bzw. die elektrischen Komponenten der Ventile V kann bzw. können an ein Steuersystem (nicht gezeigt) der Werkzeugmaschine W oder an ein eigenes Steuersystem und Stromversorgungssystem angeschlossen sein. Der Elektromotor 2 wird nur über die Speicherladeschaltung S des Druckschalters 7 ein- und ausgeschaltet. Das Gehäuse 1 kann unter einem vorbestimmten Rücklaufdruck stehen oder ist drucklos.

Das in Fig. 4 gezeigte, beispielsweise als Einschraubpatrone in das Ventilblockgehäuse 5 eingeschraubte 3-Wege-Druckminderventil 6 weist ein rohrförmiges Gehäuse 30 auf, in welchem die Feder 29 untergebracht ist, deren Vorspannung entweder mittels einer Handhabe 31 fest eingestellt oder nach Bedarf regelbar ist. Die Feder 29 stützt sich an einem Widerlager 32 ab, das auf der Oberseite eines Kolbens 33 aufsteht, der in einer Kammer 41 abgedichtet verschieblich ist und in einem mittleren Höhenbereich einen Durchgang 34 enthält. Im Bereich des Durchgangs 34 ist im Ventilblockgehäuse 5 der zweite Ausgang 15 des 3-Wege-Druckminderventils 6 angeordnet, während dem unteren Ende des Kolbens 33 der erste Ausgang 14 zugeordnet ist. Im Durchgang 34 ist ein stationärer Pilot-Sitzventil-Öffnungsanschlag 35, beispielsweise ein Zylinderstift, angeordnet, der auf eine Stößelbetätigung eines im axial durchgängig ausgebildeten Kolben 33 angeordnetes Pilot-Sitzventil 36 in einem Durchgang 39 des Kolbens 33 ausgerichtet ist. Am unteren Ende des Kolbens 33 ist ein axial durchgängiger Stößel 37 angeordnet, der auf ein kugeliges oder kegeliges Schließglied 38 ausgerichtet ist, das mit einem stationären Sitz 40, z.B. unter Federbelastung, zusammenarbeitet. Der Sitz 40 ist zwischen dem ersten Ausgang 14 zum Niederdruck-Abschnitt und dem Eingang 13 vom Hochdruck-Abschnitt 9 angeordnet, wobei sich das Schließglied 38 auf der Seite des Eingangs 13 des Sitzes 40 befindet und in Fig. 4 seine leckagefreie Absperrstellung eingenommen hat.

Das Druckniveau im Hochdruck-Abschnitt 9 beaufschlagt das Schließglied 38 in Richtung zum Sitz 40, während das niedrigere Druckniveau im ersten Ausgang 14 in Öffnungsrichtung wirkt. Über den Stößel 37, den Kolben 33 und das Widerlager 32 wirkt auch die Vorspannkraft der Feder 29 in Öffnungsrichtung auf das Schließglied 38. Der Kolben 33 wird vom Druckniveau im Niederdruck-Abschnitt 12 in Öffnungsrichtung gegen die Feder 29 beaufschlagt, wenn das Pilot-Sitzventil 36 (wie gezeigt) in der leckagefreien Absperrstellung ist. Bezüglich des Rücklaufdrucks im zweiten Ausgang 15 ist der Kolben 33 druckausgeglichen, da er beiderseits des Durchgangs 34 in der Kammer 41 Abdichtungen aufweist. Das Rohrgehäuse 30 enthält Luft.

Die Feder 29 ist so vorgespannt, dass sie bei Erreichen der vorerwähnten Druckniveaus im Hochdruck-Abschnitt 9 und im Niederdruck-Abschnitt 12 das Schließglied 38 unter dem Druckniveau des Hochdruck-Abschnittes 9 in der leckagefreien Absperrstellung belässt. Sinkt das Druckniveau im Niederdruck-Abschnitt 12 aufgrund Verbrauchs, drückt die Feder 29 über den Stößel 37 das Schließglied 38 vom Sitz 40 weg, so dass das Druckniveau im Niederdruck-Abschnitt 12 wieder hergestellt wird. Kommt es im Niederdruck-Abschnitt 12 beispielsweise aufgrund einer Temperaturerhöhung oder aus anderen Gründen zu einer Drucksteigerung über das vorgewählte Druckniveau, dann wird der Kolben 33 bei leckagefreier Absperrstellung des Schließgliedes 38 gegen die Feder 29 nach oben verschoben, bis die Stößelbetätigung des Pilot-Sitzventils 36 an den Pilot-Sitzventil-Öffnungsanschlag 35 gelangt und das Pilot-Sitzventil 36 öffnet und die Drucksteigerung durch den unteren Teil des Kolbens 33 in den zweiten Ausgang 15 abbaut. Ist das vorgewählte Druckniveau im Niederdruck-Abschnitt 12 wieder hergestellt, dann führt die Feder 29 den Kolben 33 wieder in die gezeigte Stellung zurück, ohne die Absperrstellung des Schließgliedes 38 zunächst aufzuheben. Deshalb wird aus dem Druckspeicher 8 kein Druckmittel entnommen und spricht auch der Druckschalter 7 nicht an, sondern die gesamte Druckdifferenz im Druckspeicher bleibt zur Versorgung der Funktionskomponenten nutzbar.

## Patentansprüche

1. Motorpumpenaggregat (A) für eine hydraulisch betätigbare Funktionskomponenten (K) aufweisende Werkzeugmaschine (W), wobei das Motorpumpenaggregat (A) in einem an eine Druckleitung (10) und eine Rücklaufleitung (11) angeschlossenen, ein Ölreservoir bildenden Gehäuse (1), einen Elektromotor (2) und wenigstens eine Konstantpumpe (3) enthält und die Druckleitung (10) über ein am oder im Motorpumpenaggregat (A) untergebrachtes Druckminderventil (D) in einen Hochdruck-Abschnitt (9) des Motorpumpenaggregats (A) und einen Niederdruck-Abschnitt (12) unterteilt ist, die Ventile (V) an den Niederdruck-Abschnitt (12) und an den Hochdruck-Abschnitt (9) ein mit Gasdruck vorgespannter Druckspeicher (8) und ein Druckschalter (7) angeschlossen sind, wobei das Druckminderventil (D) ein am oder im Motorpumpenaggregat (A) angeordnetes 3-Wege-Druckminderventil (6) in Sitzventilbauweise ist, dessen Eingang (13) stromab des Druckschalters (7) an den Hochdruck-Abschnitt (9), dessen erster Ausgang (14) an den Niederdruck-Abschnitt (12), und dessen zweiter Ausgang (15) unter Umgehung des Druckspeichers (8) und Druckschalters (7) an die Rücklaufleitung (11) angeschlossen sind, und der Druckspeicher (8) beim, am oder im Motorpumpenaggregat (A) angeordnet ist und innerhalb seines Ölaufnahmevolumens eine Gasdruckvorspannung mit etwa dem Druckniveau im Niederdruck-Abschnitt (12) aufweist, **gekennzeichnet durch** die Kombination folgender Merkmale:
a) der Druckschalter (7) gehört zu einer Speicher-Ladeschaltung (S) nur zum Ein- und Ausschalten des Elektromotors (2) der wenigstens einen Konstantpumpe (3) und ist eingestellt auf eine Abschalt-Obergrenze entsprechend dem Druckniveau im Hochdruck-Abschnitt (9) und eine Einschalt-Untergrenze mindestens entsprechend dem 1,5-fachen Druckniveau im Niederdruck-Abschnitt (12),
b) das Ölaufnahmevolumen des Druckspeichers (8) ist zur primären hydraulischen Versorgung der Funktionskomponenten (K) der Werkzeugmaschine (W) aus dem Druckspeicher (8) bemessen, wobei die Konstantpumpe (3) nur über die Speicher-Ladeschaltung (S) im Abschaltbetrieb ein- und ausschaltbar ist,
c) die Ventile (V) sind am Gehäuse (1) des Motorpumpenaggregats (A) außenseitig montiert, der Druckspeicher (8) ist kugelig mit einem Kugel-Außendurchmesser kleiner als die Außenabmessungen des Gehäuses (1) und so am Gehäuse (1) montiert, dass er zumindest weitestgehend innerhalb des vom Gehäuse (1) und den Ventilen (V, D) beanspruchten Bauraums (h, b, t) untergebracht ist,
d) der Druckschalter (7) ist stromab eines Druckspeicher-Anschlusses (17) in einem Druckschalter-Anschluss (16) an den Hochdruck-Abschnitt (9) angeschlossen, und
e) der Druckschalter-Anschluss (16), der Druckspeicher-Anschluss (17), das 3-Wege-Druckminderventil (6) und eine Leitung (16') vom zweiten Auslass (15) des 3-Wege-Druckminderventils (6) zur Rücklaufleitung (11) sind in einem am Gehäuse (1) platzierten Ventilblockgehäuse (5) zusammengefasst.

2. Motorpumpenaggregat nach Anspruch 1, **dadurch gekennzeichnet, dass** sämtliche Ventile (V) in Sitzventil-Bauweise mit leckagefreien Absperrstellungen ausgebildet sind.

3. Motorpumpenaggregat nach Anspruch 1, **dadurch gekennzeichnet, dass** das Druckniveau im Niederdruck-Abschnitt (12) bei etwa 100 bar und das Druckniveau im Hochdruck-Abschnitt (9) bei etwa 200 bar liegen, dass die Abschalt-Ober- und Einschalt-Untergrenzen bei etwa 200 bar und etwa 160 bar liegen, und dass das Ölaufnahmevolumen des Druckspeichers (8) um etwa 1,0 Liter beträgt.

4. Motorpumpenaggregat nach Anspruch 1, **dadurch gekennzeichnet, dass** der Kugel-Außendurchmesser des Druckspeichers (8) etwa 150 mm beträgt.

5. Motorpumpenaggregat nach Anspruch 1, **dadurch gekennzeichnet, dass** das Ventilblockgehäuse (5) in etwa in der Höhenmitte des Gehäuses (1) des Motorpumpenaggregats (A) und der Druckspeicher (8) an der Oberseite (22) des Gehäuses (1) platziert und über eine außerhalb des Gehäuses (1) montierte Verrohrung (28) verbunden sind.

6. Motorpumpenaggregat nach Anspruch 5, **dadurch gekennzeichnet, dass** der Druckspeicher (8) mit einer Spannschelle (25), vorzugsweise mit einem Schnellverschluss (27), auf einem Gehäuse-Auflager (24) fixiert ist.

7. Motorpumpenaggregat nach Anspruch 1, **dadurch gekennzeichnet, dass** das 3-Wege-Druckminderventil (6) zwischen dem Eingang (13) und dem ersten Ausgang (14) einen Sitz (40) und ein kugeliges oder kegeliges, gegen eine Feder (29) in Schließrichtung zum Sitz (40) vom Druckniveau im Hochdruck-Abschnitt (9) und in Öffnungsrichtung vom Sitz (40) weg vom Druckniveau im Niederdruck-Abschnitt (12) beaufschlagtes Schließglied (38) aufweist, welches in Öffnungsrichtung aus einer leckagefreien Absperrstellung am Sitz (40) von der Feder (29) durch einen zum zweiten Ausgang (15) durchgängigen, von einem vom Druckniveau im Niederdruck-Abschnitt (12) beaufschlagten, gegenüber dem Rücklaufdruck druckausgeglichenen Kolben (33) betätigbar ist, und dass im Kolben (33) zwischen den ersten und zweiten Ausgängen (14, 15) ein vom Schließglied (38) baulich getrenntes Pilot-Sitzventil (36) mit Stößelbetätigung untergebracht und auf einen im Bereich des zweiten Ausgangs (15) stationär angeordneten Pilot-Sitzventil-Öffnungsanschlag (35) ausgerichtet ist.

## Claims

1. Motor pump unit (A) for a machine tool (W) comprising hydraulically actuable function components (K), the motor pump unit (A) containing an electric motor (2) and at least one constant displacement pump (3) in a housing (1) defining an oil reservoir and being connected to a pressure line (10) and to a return line (11), wherein the pressure line (10) is sub-divided into a high pressure section (9) and a low pressure section (12) of the motor pump unit (A) via a pressure reducing valve (D) arranged at or in the motor pump unit (A), valves (V) being connected to the low pressure section (12) and a pressure accumulator (8) pre-biased by gas pressure and a pressure switch (7) being connected to the high pressure section (9), the pressure reducing valve (D) being a 3-way pressure reducing valve having a seat valve design and being arranged at or in the motor pump unit (A), an inlet port (13) of the pressure reducing valve (3) being connected downstream of the pressure switch (7) to the high pressure section (9), a first exit port (14) being connected to the low pressure section (12), and a second outlet port (15) being connected such to the return line (11) that the pressure accumulator (8) and the pressure switch (7) are deviated, the pressure accumulator (8) being arranged close to, at or in the motor pump unit (A) and being pre-loaded within its oil reservoir volume by gas pressure at a pressure level substantially corresponding to the pressure level in the low pressure section (12), **characterised by** the combination of the following features:
a) the pressure switch (7) only for switching on and switching off the electric motor (2) of the at least one constant displacement pump (3) belongs to an accumulator charging circuitry (S) and is set to a switching off upper limit corresponding to the pressure level in the high pressure section (9) and to a switching on lower limit at least corresponding to the 1.5-fold pressure level in the low pressure section (12),
b) the oil reservoir volume of the pressure accumulator (8) is measured for primarily hydraulically supplying the function components (K) of the machine tool (W) from the pressure accumulator (8), and the constant displacement pump being switched on and switched off in intermittent operation only via the accumulator charging circuitry (S),
c) the valves (V) are mounted at the outer side of the housing (1) of the motor pump unit (A), the pressure accumulator (8) is spherical and has a sphere outer diameter smaller than the outer dimensions of the housing (1) and is mounted such at the housing (1), that the pressure accumulator at least substantially is accommodated within the mounting space (h, b, t) occupied by the housing (1) and the valves (V, D),
d) the pressure switch (7) is connected to the high pressure section (9) at a pressure switch connection port (16) located downstream of a pressure accumulator connection (7), and
e) the pressure switch connection port (16), the pressure accumulator connection port (17), the 3-way pressure reducing valve (6) and a line (16') from the second outlet port (15) of the 3-way pressure reducing valve (6) to the return line (11) are combined within a valve block housing (5) placed at the housing (1).

2. Motor pump unit according to claim 1, **characterised in that** all valves (V) are designed as seat valves and have leakage-free blocking positions.

3. Motor pump unit according to claim 1, **characterised in that** the pressure level in the low pressure section (12) is about 100 bars and the pressure level in the high pressure section (9) is about 200 bars, that the switching off upper limit and the switching on lower limit are about 200 bars and about 160 bars, and that the oil reservoir volume of the pressure accumulator (8) amounts to about 1.0 litres.

4. Motor pump unit according to claim 1, **characterised in that** the sphere outer diameter of the pressure accumulator (8) amounts to about 150 mm.

5. Motor pump unit according to claim 1, **characterised in that** the valve block housing (5) is placed substantially in the middle of the height of the housing (1) of the motor pump unit (A), that the pressure accumulator (8) is placed at the top side (22) of the housing (1), and that the valve block housing (5) and the pressure accumulator (8) are interconnected by a tubing (28) mounted outside of the housing (1).

6. Motor pump unit according to claim 5, **characterised in that** the pressure accumulator (8) is fixed on a housing support (24) by means of a tensioning clip (25), preferably including a quick fastener.

7. Motor pump unit according to claim 1, **characterised in that** the 3-way pressure reducing valve (6) comprises between the inlet port (13) and the first outlet port (14) a seat (40) and a closure member (38) which either is spherical or conical and is loaded by the pressure level in the high pressure section (9) counter to a spring (29) and in closing direction towards the seat (40) and in opening direction away from the seat (40) by the pressure level in the low pressure section (12), that the closure member (38) is actuated in opening direction out of a leakage-free blocking position at the seat (40) by the spring (29) via a piston (33), which piston (33) allows through flow to the second outlet port (15), is loaded by the pressure level in the low pressure section (12) and is pressure balanced in relation to the return pressure, and that a pilot seat valve (36) having a plunger actuation and being structurally separated from the closure member (38) is accommodated in the piston (33) between the first and second outlet ports (14, 15), which pilot seat valve plunger actuation points towards a pilot seat valve opening stop (35) stationarily arranged in the region of the second outlet port (15).

## Revendications

1. Groupe motopompe (A) pour une machine-outil (W) comprenant des composants fonctionnels (K) actionnables par voie hydraulique, groupe motopompe (A)
dans lequel un carter (1) formant un réservoir d'huile et raccordé à une conduite de pression (10) et à une conduite de retour (11), renferme un moteur électrique (2) et au moins une pompe à cylindrée constante (3), et la conduite de pression (10) est subdivisée, par une vanne de réduction de pression (D) logée sur ou dans le groupe motopompe (A), en un secteur haute-pression (9) du groupe motopompe (A) et un secteur basse-pression (12), les vannes (V) étant raccordées au secteur basse-pression (12), et un accumulateur de pression (8), mis en charge préalable par une pression de gaz, et un commutateur manométrique (7) étant raccordés au secteur haute-pression (9), et
dans lequel la vanne de réduction de pression (D) est une vanne de réduction de pression multivoies à 3 orifices (6) du type à siège, qui est agencée sur ou dans le groupe motopompe (A), dont l'entrée (13) est raccordée au secteur haute-pression (9) en aval du commutateur manométrique (7), dont la première sortie (14) est raccordée au secteur basse-pression (12), et dont la deuxième sortie (15) est raccordée à la conduite de retour (11) en contournant l'accumulateur de pression (8) et le commutateur manométrique (7), et l'accumulateur de pression (8) est agencé au niveau de, sur ou dans le groupe motopompe (A), et présente à l'intérieur de son volume d'admission d'huile, une charge préalable par pression de gaz avec environ le niveau de pression dans le secteur basse-pression (12), **caractérisé par** la combinaison des propriétés suivantes :
a) le commutateur manométrique (7) fait partie d'un circuit de charge d'accumulateur (S) uniquement pour la mise en marche ou l'arrêt du moteur électrique (2) de ladite au moins une pompe à cylindrée constante (3), et est réglé sur une limite supérieure d'arrêt correspondant au niveau de pression dans le secteur haute-pression (9), et une limite inférieure de mise en marche correspondant au moins à 1,5 fois le niveau de pression dans le secteur basse-pression (12),
b) le volume d'admission d'huile de l'accumulateur de pression (8) est dimensionné pour l'alimentation hydraulique primaire des composants fonctionnels (K) de la machine-outil (W) à partir de l'accumulateur de pression (8), la pompe à cylindrée constante (3) ne pouvant être mise en marche et arrêtée que par l'intermédiaire du circuit de charge d'accumulateur (S) dans le mode arrêt,
c) les vannes (V) sont montées sur le côté extérieur du carter (1) du groupe motopompe (A), l'accumulateur de pression (8) est sphérique avec un diamètre extérieur de sphère inférieur aux dimensions extérieures du carter (1), et monté de manière telle sur le carter (1), qu'il soit logé au moins dans une large mesure à l'intérieur de l'espace d'implantation (h, b, t) occupé par le carter (1) et les vannes (V, D),
d) le commutateur manométrique (7) est raccordé au secteur haute-pression (9) au niveau d'un raccord de commutateur manométrique (16), en aval d'un raccord d'accumulateur de pression (17), et
e) le raccord de commutateur manométrique (16), le raccord d'accumulateur de pression (8), la vanne de réduction de pression multivoies à 3 orifices (6) et une conduite (16') de la deuxième sortie (15) de la vanne de réduction de pression multivoies à 3 orifices (6) vers la conduite de retour (11), sont regroupés dans un boitier de bloc de vanne (5) placé sur le carter (1).

2. Groupe motopompe selon la revendication 1, **caractérisé en ce que** toutes les vannes (V) sont d'une conception du type vanne à siège, avec des positions de fermeture exemptes de fuites.

3. Groupe motopompe selon la revendication 1, **caractérisé en ce que** le niveau de pression dans le secteur basse-pression (12) se situe à environ 100 bar, et le niveau de pression dans le secteur haute-pression (9) à environ 200 bar, **en ce que** les limites supérieure d'arrêt et inférieure de mise en marche se situent environ à 200 bar et environ 160 bar, et **en ce que** le volume d'admission d'huile de l'accumulateur de pression (8) se situe environ aux alentours de 1,0 litre.

4. Groupe motopompe selon la revendication 1, **caractérisé en ce que** le diamètre extérieur de sphère de l'accumulateur de pression (8) vaut environ 150 mm.

5. Groupe motopompe selon la revendication 1, **caractérisé en ce que** le boitier de bloc de vanne (5) est placé environ à moitié de la hauteur du carter (1) du groupe motopompe (A), et l'accumulateur de pression (8) sur le côté supérieur (22) du carter (1), et sont reliés par l'intermédiaire d'une tuyauterie (28) montée à l'extérieur du carter (1).

6. Groupe motopompe selon la revendication 5, **caractérisé en ce que** l'accumulateur de pression (8) est fixé, au moyen d'un collier de serrage (25), de préférence à fermeture rapide (27), sur un appui de carter (24).

7. Groupe motopompe selon la revendication 1, **caractérisé en ce que** la vanne de réduction de pression multivoies à 3 orifices (6) comprend, entre l'entrée (13) et la première sortie (14), un siège (40) et un organe de fermeture (38) de forme sphérique ou conique, qui est sollicité, à l'encontre d'un ressort (29), en direction de la fermeture, vers le siège (40), par le niveau de pression dans le secteur haute-pression (9), et en direction de l'ouverture, en étant soulevé du siège (40), par le niveau de pression dans le secteur basse-pression (12), et qui peut être actionné en direction de l'ouverture, à partir d'une position de fermeture sans fuites sur le siège (40), par le ressort (29), par l'intermédiaire d'un piston (33) passant vers la deuxième sortie (15), sollicité par le niveau de pression dans le secteur basse-pression (12) et compensé en pression par rapport à la pression de retour, et **en ce que** dans le piston (33), entre les première et deuxième sorties (14, 15), est logée une vanne à siège pilote (36) à actionnement par poussoir, séparée constructivement de l'organe de fermeture (38), et orientée vers une butée d'ouverture (35) de vanne à siège pilote, agencée de manière stationnaire dans la zone de la deuxième sortie (15).
